# DEMANDE DE BREVET EUROPEEN

(11) **EP 1 887 177 A2**
(43) Date de publication de la demande: **13.02.2008**
(21) Numéro de dépôt: 07015176.6
(22) Date de dépôt: 02.08.2007
(51) Int. Cl.: E05F 15/16

(54) **Dispositif d'entrainement d'un element mobile d'un batiment par l'intermediaire d'un lien souple**

(30) Priorité: 07.08.2006 FR 0607191
(71) Demandeur: Somfy SAS, 74300 Cluses (FR)
(72) Inventeur: Clerget, Sergyl, 74290 Bluffy (FR)
(74) Mandataire: Bugnion Genève

(57) **Abrégé**

Dispositif (1) d'entraînement d'un élément mobile (10) d'un bâtiment, comprenant un motoréducteur (2), un rail (4) de guidage en translation d'un chariot (3) en liaison mécanique avec l'élément mobile, un lien souple (5) de transmission de puissance entre le motoréducteur et le chariot, des moyens (103A, 103B, 104, 105, 106, 107, 109) de tension du lien souple et des moyens (109, 108) d'indication de la tension du lien souple, le lien souple formant une boucle et reliant une première (7) et une deuxième roue (8), la première roue étant couplée au motoréducteur et la deuxième roue étant une roue de renvoi, caractérisé en ce que les moyens d'indication de la tension du lien souple présentent des moyens pour déterminer au moins trois valeurs distinctes de tension du lien souple.

## Description

L'invention concerne un dispositif d'entraînement d'un élément mobile d'un bâtiment, comprenant un motoréducteur, un rail de guidage en translation d'un chariot en liaison mécanique avec l'élément mobile, un lien souple de transmission de puissance entre le motoréducteur et le chariot et des moyens de tension du lien souple, le lien souple formant une boucle et reliant une première et une deuxième roue, la première roue étant couplée au motoréducteur et la deuxième roue étant une roue de renvoi.

Un des problèmes posés par ce type de dispositif concerne le réglage et le contrôle de la tension du lien souple. En effet, celle-ci a une importance déterminante dans le bon fonctionnement du dispositif. Une tension trop importante entraînera des pertes par frottement importantes et beaucoup d'énergie sera nécessaire pour déplacer l'élément mobile. La conséquence de ces pertes de rendement peut être le blocage du moteur ou l'impossibilité de soulever une certaine charge. A l'inverse, si le lien souple comprend une chaîne, une tension trop faible entraînera des risques de déraillement. Si le lien souple comprend une courroie ou un câble, une tension trop faible du lien souple risque de provoquer des défauts d'entraînement de celui-ci par frottement au niveau d'une poulie motrice solidaire du motoréducteur. Le mouvement de l'élément mobile peut alors être saccadé.

On connaît du document FR 2 798 956, un dispositif de commande d'un organe de volet roulant au moyen d'un câble de commande. Pour effectuer cette commande, le câble doit être tendu jusqu'à atteindre une tension calibrée. Pour provoquer une telle tension, on utilise un système vis-écrou agissant sur une extrémité du câble. Par l'action d'un ressort, une pièce est déplacée jusqu'à ce qu'elle atteigne une position repérée lorsque la tension calibrée est exercée dans le câble.

On connaît du document DE 100 53 777 un dispositif de transmission par lien souple pour l'entraînement d'un chariot. Ce dispositif comprend une roue mobile en translation et rappelée par un système à ressort pour assurer la tension du lien souple. Ce système à ressort est couplé à un interrupteur qui peut changer d'état selon la position de la roue mobile et donc selon la tension du lien souple. L'interrupteur est dans un premier état lorsque la valeur de tension vaut une première valeur ou une valeur comprise dans un intervalle restreint autour d'une première valeur et est dans un deuxième état dans le cas contraire. Un tel dispositif n'apporte aucune aide quand il s'agit de contrôler ou de régler la tension du lien souple. En particulier, lorsque l'interrupteur est dans le deuxième état, on n'a aucune information permettant de savoir s'il faut tendre ou détendre le lien souple pour obtenir une tension correcte de celui-ci.

On connaît aussi du brevet US 2,335,336 un dispositif semblable. Il permet l'entraînement d'un chariot grâce à un lien souple. Ce dispositif comprend une roue mobile en translation et rappelée par un système à ressort pour assurer la tension du lien souple. Ce système à ressort est couplé à un interrupteur qui peut changer d'état selon la position de la roue mobile et donc selon la tension du lien souple. Dans le cas de ce dispositif, l'interrupteur change d'état lorsque la tension franchit à la hausse ou à la baisse une valeur de tension donnée. Ainsi, on a accès à une seule valeur de tension, celle à laquelle l'interrupteur change d'état ; ceci est peu pratique lorsque l'on veut régler la tension du lien souple et ça l'est encore moins lorsque l'on veut simplement contrôler la tension du lien souple. En fait, ce dispositif n'est conçu que pour assurer une sécurité en interdisant des manoeuvres lorsque la tension du lien souple franchit une valeur donnée.

On connaît encore du brevet US 4,770,224 un dispositif de transmission par lien souple pour l'entraînement d'un chariot. Ce dispositif comprend une roue mobile en translation et rappelée par un système à ressort pour assurer la tension du lien souple. Le dispositif ici décrit ne comprend pas de moyen permettant d'indiquer une tension du lien souple.

Le but de l'invention est de fournir un dispositif d'entraînement d'un élément mobile obviant aux inconvénients précités et améliorant les dispositifs connus de l'art antérieur. En particulier, l'invention permet un réglage aisé et précis de la tension d'un lien souple. Il permet notamment un contrôle visuel précis de la tension du lien souple.

Selon un premier aspect de l'invention, le dispositif d'entraînement selon l'invention est caractérisé est défini par la revendication 1.

Différents modes de réalisation sont définis par les revendications dépendantes 2 à 7.

Selon un deuxième aspect de l'invention, un dispositif d'entraînement d'un élément mobile d'un bâtiment selon l'invention, comprend un motoréducteur, un rail de guidage en translation d'un chariot en liaison mécanique avec l'élément mobile, un lien souple de transmission de puissance entre le motoréducteur et le chariot, des moyens de tension du lien souple et des moyens d'indication de la tension du lien souple, le lien souple formant une boucle et reliant une première et une deuxième roue, la première roue étant couplée au motoréducteur et la deuxième roue étant une roue de renvoi. Il est caractérisé en ce que les moyens de tension du lien souple comprennent une vis agissant sur la position relative des deux roues en prenant appui sur une butée et en ce que les moyens d'indication de la tension du lien souple comprennent un écrou en liaison hélicoïdale avec la vis, immobilisé en rotation et mobile en translation et un ressort en appui sur la butée et sur l'écrou.

Les moyens d'indication de la tension du lien souple peuvent être couplés avec les moyens de tension du lien souple.

Les moyens de tension du lien souple peuvent agir sur la première ou la deuxième roue guidant le lien souple.

Les moyens d'indication de la tension du lien souple peuvent permettre de déterminer au moins trois valeurs distinctes de tension du lien souple.

Les moyens d'indication de la tension du lien souple peuvent comprendre des moyens de mesure de la tension du lien souple.

Les moyens de mesure de la tension du lien souple peuvent comprendre, à proximité d'un logement dans lequel est mobile en translation l'écrou, des repères prévus pour déterminer la position de l'écrou dans le logement

Le dispositif peut comprendre, à proximité d'un logement dans lequel est mobile en translation l'écrou, des repères prévus pour déterminer la position de l'écrou dans le logement.

Le dessin annexé représente, à titre d'exemple, un mode de réalisation d'un dispositif selon l'invention.
La figure 1 est un schéma d'un mode de réalisation d'un dispositif motorisé de manoeuvre de porte de garage selon l'invention.
La figure 2 est une vue partielle de détail de ce mode de réalisation de dispositif motorisé de manoeuvre de porte de garage.
La figure 3 est une vue en coupe partielle selon le plan III-III de la figure 2 représentant des détails de ce mode de réalisation de dispositif motorisé de manoeuvre de porte de garage.

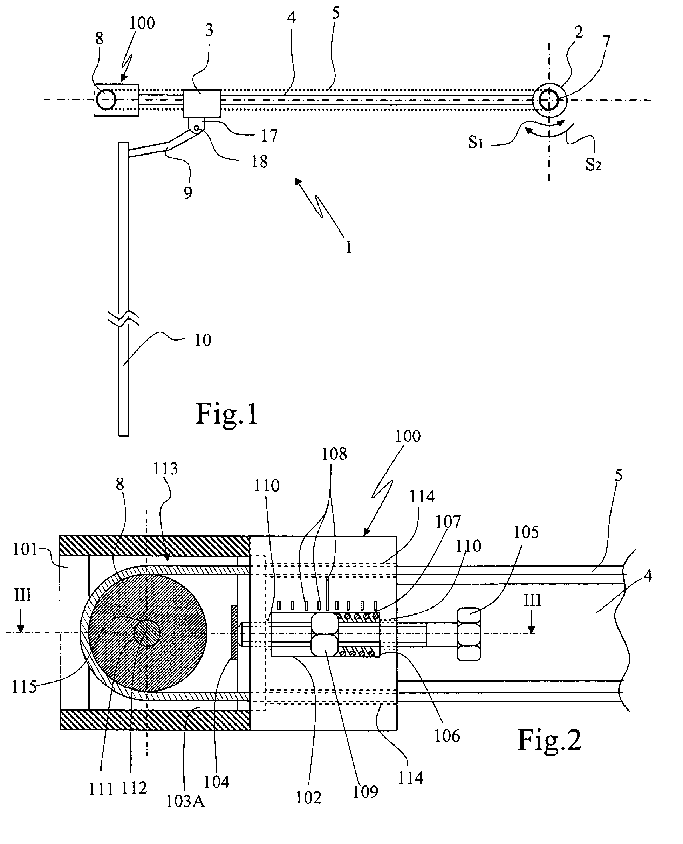

Le dispositif d'entraînement 1 représenté à la figure 1 est destiné à la manoeuvre d'un élément mobile d'un bâtiment tel que par exemple une porte de garage basculante 10 ou une porte de garage sectionnelle. Il comprend un rail de guidage 4 d'un chariot 3. Ce chariot 3 est mobile en translation entre les deux extrémités du rail. Il est déplacé par l'action d'une chaîne 5 tendue entre deux roues dentées disposées aux extrémités du rail. La roue dentée 8 constitue une roue de renvoi. Elle se trouve la plus proche de la porte lorsque celle-ci est fermée et est montée folle dans un élément de guidage 100. L'autre roue dentée 7 constitue une roue d'entraînement de la chaîne. Elle se trouve à l'autre extrémité du rail et est entraînée en rotation par un motoréducteur 2. Dans le cas d'une porte de garage, le rail est fixé au plafond du bâtiment au niveau de ces extrémités.

Le chariot 3 est lié mécaniquement, par un bras 9, à la porte de garage 10. Les liaisons mécaniques entre le chariot et le bras d'une part, et le bras et la porte d'autre part, sont par exemple de type pivot. Lorsque le chariot coulisse le long du rail 4, la porte 10 est tirée ou poussée par le bras 9 et se déplace ainsi vers une position ouverte ou fermée selon un mouvement déterminé par des moyens de guidage de celle-ci.

La chaîne pourrait être remplacée par toute autre forme de lien souple tel qu'une courroie lisse, une courroie crantée ou un câble métallique. On utilise alors, à la place des roues dentées, des poulies. Le lien souple peut également comprendre une partie formée par une chaîne et une partie formée par un câble. Seule la roue de renvoi située à proximité de la porte lorsqu'elle est en position fermée est alors remplacée par une poulie. La combinaison chaîne-câble est la plus avantageuse en termes de rendement mécanique et de coût. La partie chaîne permet un entraînement facile par roue dentée et un comptage précis. La partie câble limite la détente du lien souple et donc la flèche des brins mous. Le lien souple peut encore être du même type que celui décrit dans le modèle d'utilité DE 94 02 813 U, c'est-à-dire comprenant une partie munie de dents ou d'encoches pour coopérer avec une roue d'entraînement et une partie constituée par une courroie lisse.

Pour actionner le mouvement d'ouverture de la porte, le motoréducteur tourne dans un sens S1 permettant d'exercer une traction sur le brin inférieur entre la roue dentée d'entraînement et le chariot.

A l'inverse, dans le mouvement de fermeture de la porte, le motoréducteur tourne dans un sens S2 permettant d'exercer une traction sur le brin supérieur et sur la partie du brin inférieur séparant le chariot et la roue folle.

Le chariot 3 comprend des moyens d'accrochage du lien permettant d'assurer la liaison mécanique entre le lien souple et le chariot et l'entraînement cinématique du chariot par le lien. On peut par exemple utiliser un système d'accroche d'une navette fermant la chaîne.

Le chariot 3 présente également une chape de liaison au bras 9. Cette chape est formée par deux oreilles 17 pouvant être rapportées par soudure sur le corps du chariot et présentant un perçage commun 18.

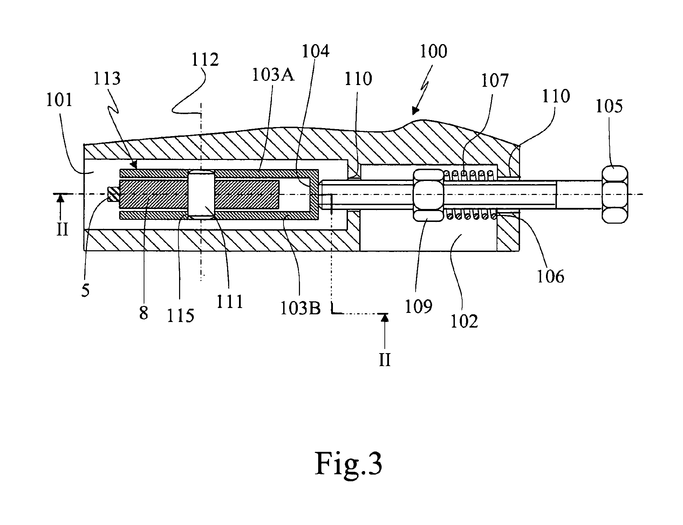

Le dispositif comprend des moyens de tension du lien souple et des moyens d'indication de cette tension représentés aux figures 2 et 3.

Ceux-ci sont localisés au niveau de l'élément 100 de guidage du lien souple renvoyant celui-ci vers la roue motrice 7 et vers le chariot 3.

Dans l'élément de guidage, différents logements sont pratiqués : un premier 101 est destiné à recevoir la roue de renvoi 8, un second 102 est destiné à recevoir un écrou 109 et trois autres 114, 110 constitués de perçages longitudinaux sont destinés aux passages de la chaîne et d'une vis 105.

Une chape 103 est obtenue par pliage d'un flanc de tôle et par réalisation d'un alésage 115 d'axe 112. Cette chape présente deux ailes symétriques 103A, 103B reliées par une troisième aile centrale 104. La roue de renvoi est montée folle en rotation sur un arbre 111 logé dans l'alésage 115. L'ensemble 113 ainsi constitué est mobile en translation dans le premier logement 101 parallèlement à l'axe du rail de guidage, la roue de renvoi peut ainsi être éloignée ou rapprochée de la roue motrice de manière à régler la tension de la chaîne. Préférentiellement, l'ensemble 113 est monté de manière à ce que l'aile centrale 104 soit située entre les deux brins inférieur et supérieur du lien souple.

Dans le deuxième logement 102, l'écrou 109 est immobilisé en rotation et libre en translation. En effet, la hauteur du logement est, à un jeu de fonctionnement près, égale à la cote sur plat de l'écrou. La vis 105 est vissée dans cet écrou. Son extrémité exerce un effort sur l'ensemble 113, cet effort entraînant la tension de la chaîne 5. Cet effort est repris par une butée 106 réalisée dans l'élément de guidage au niveau du deuxième logement 102. La reprise d'effort est réalisée par l'action de l'écrou sur la butée par l'intermédiaire d'un ressort hélicoïdal 107. Des repères 108 sont pratiqués le long du bord longitudinal du deuxième logement. Ils permettent d'indiquer avec précision la position de l'écrou par rapport à la butée. En conséquence, ils permettent d'indiquer la tension de la chaîne 5. En effet, l'effort exercé par la vis sur l'ensemble 113 est lié à la tension dans la chaîne et est sensiblement proportionnel à la déformation du ressort 107.

Grâce à ces moyens, on réalise des moyens d'indication de la tension du lien souple comprenant des moyens de mesure de la tension du lien souple ou des moyens de lecture de la tension du lien souple. En effet, la coopération de l'écrou et des repères constitue un moyen de lecture de la longueur du ressort et donc un moyen de lecture de la mesure de la tension du lien souple, les efforts de tension du lien souple étant intégralement repris par le ressort. Ces moyens de mesure ou de lecture d'une mesure de tension du lien souple fonctionne par coïncidence spatiale de l'écrou et des repères, une valeur de tension étant affectée à chaque repère et le lien souple présentant la tension affectée à un repère lorsque l'écrou se trouve en vis-à-vis de ce repère.

Grâce à ces moyens, il est possible de déterminer de manière précise la tension du lien souple dans un large intervalle de valeurs. Cet intervalle est défini par la longueur du deuxième logement, par la raideur du ressort et par la longueur minimale du ressort comprimé. Les moyens décrits précédemment permettent de déterminer au moins trois valeurs de tension du ressort, ces trois valeurs correspondant à trois positions distinctes de l'écrou dans lesquelles il coïncide avec trois repères distincts. Pour ce faire, au moins trois repères sont pratiqués le long du deuxième logement. Cependant, le nombre de ces repères prend, de préférence, n'importe quelle valeur entière comprise entre deux et vingt.

De préférence, l'écrou 107 est du type auto-freiné, tel que par exemple un écrou avec un insert en nylon.

Grâce à un tel dispositif, le réglage de la tension de la chaîne peut être réalisé de manière aisée : il suffit de visser ou de dévisser la vis 105 jusqu'à obtenir la tension désirée qui est visualisée par la position de l'écrou 109 par rapport aux repères 108. En d'autres termes, il suffit de visser ou de dévisser la vis 105 jusqu'à amener l'écrou 109 en regard du repère adéquat. Grâce aux moyens permettant d'indiquer visuellement au moins trois valeurs de tension du lien souple, le réglage est facilité. En effet, dès que l'installateur fait tourner la vis pour la visser dans l'écrou, ce dernier se déplace. Ainsi, l'installateur peut déterminer, simplement en observant le mouvement de l'écrou s'il est en train de tendre ou détendre le lien souple et appliquer en conséquence, si nécessaire, des actions correctives (comme un changement de sens de rotation de la vis).

Dans l'exemple précédent, c'est la roue de renvoi qui est déplacée dans un référentiel pour l'éloigner ou la rapprocher de la roue motrice. Cependant, il est évident que, même si cela semble a priori moins pratique, la roue motrice pourrait être déplacée dans ce référentiel pour l'éloigner ou la rapprocher de la roue de renvoi.

## Revendications

1. Dispositif (1) d'entraînement d'un élément mobile (10) d'un bâtiment, comprenant un motoréducteur (2), un rail (4) de guidage en translation d'un chariot (3) en liaison mécanique avec l'élément mobile, un lien souple (5) de transmission de puissance entre le motoréducteur et le chariot, des moyens (103A, 103B, 104, 105, 106, 107, 109) de tension du lien souple et des moyens (109, 108) d'indication de la tension du lien souple, le lien souple formant une boucle et reliant une première (7) et une deuxième roue (8), la première roue étant couplée au motoréducteur et la deuxième roue étant une roue de renvoi, **caractérisé en ce que** les moyens d'indication de la tension du lien souple présentent des moyens pour déterminer au moins trois valeurs distinctes de tension du lien souple.

2. Dispositif selon la revendication 1, **caractérisé en ce que** les moyens d'indication de la tension du lien souple sont couplés avec les moyens de tension du lien souple.

3. Dispositif selon la revendication précédente, **caractérisé en ce que** les moyens de tension du lien souple agissent sur la première ou la deuxième roue guidant le lien souple.

4. Dispositif selon l'une des revendications précédentes, **caractérisé en ce que** les moyens de tension du lien souple comprennent une vis (105) agissant sur la position relative des deux roues en prenant appui sur une butée (106).

5. Dispositif selon la revendication précédente, **caractérisé en ce que** les moyens d'indication de la tension du lien souple comprennent un écrou (109) en liaison hélicoïdale avec la vis, immobilisé en rotation et mobile en translation et un ressort (107) en appui sur la butée et sur l'écrou.

6. Dispositif selon l'une des revendications précédentes, **caractérisé en ce que** les moyens d'indication de la tension du lien souple comprennent des moyens de mesure de la tension du lien souple.

7. Dispositif selon la revendication précédente, **caractérisé en ce que** les moyens de mesure de la tension du lien souple comprennent, à proximité d'un logement (102) dans lequel est mobile en translation l'écrou, des repères (108) prévus pour déterminer la position de l'écrou dans le logement
